# EUROPEAN PATENT APPLICATION

(11) **EP 1 213 564 A2**
(43) Date of publication of application: **12.06.2002**
(21) Application number: 01310292.6
(22) Date of filing: 10.12.2001
(51) Int. Cl.: G01D 11/24

(54) **Plug-in sensor assembly**

(30) Priority: 08.12.2000 US 732827
(71) Applicant: DANA CORPORATION, Toledo, OH 43697 (US)
(72) Inventor: Koopman, Laurent, 8210 Zedelgem (BE); Genouw, Didier, Eernegem, Ichtegem (BE)
(74) Representative: Cheyne, John Robert Alexander Mackenzie

(57) **Abstract**

A sensor assembly for a transmission 10 is provided. The sensor assembly includes a sensor module 20 and a sensor 22. The sensor module 20 includes a body 24 that is received within a housing wall of the transmission and includes a first connector 54. A lead wire 26, 28, 30 extends from the body to route signals generated by the sensor 22 to a central connector 68 disposed within the transmission 10. The sensor 22 includes a housing 70 configured to be received by the sensor module 20 and a sensing element 72 disposed within the housing 70. The housing 70 includes a second connector 80 configured to engage the first connector 54 of the sensor module 20. Through the first and second connectors 54, 80, both the sensor module 20 and the sensor 22 are made unique so that fail-safe installation is ensured.

## Description

### BACKGROUND OF THE INVENTION

### 1. Field of the Invention

This invention relates to transmissions and, in particular, to sensors used in transmissions to monitor parameters such as speed and temperature.

### 2. Disclosure of Related Art

A conventional transmission includes a plurality of sensors that are used to measure speed, temperature, gear position, valve position, etc. These sensors generate output signals that are provided to one or more electronic control circuits used to control shifting in the transmission and to control other components of the machine in which the transmission installed, such as the engine in a conventional vehicle. At one time, these sensors were installed in the transmission by the transmission manufacturer prior to shipment to customers. The sensors were often damaged, however, during shipment and during installation of the transmission within the vehicle or other machine. As a result, sensors today are generally shipped to the customer separate from the transmission. The customer then installs the sensors after the transmission has been placed into the vehicle or other machine and connects the sensor wires to various control circuits. The installation of sensors and connection of wires by the customer has proven disadvantageous, however. In particular, installation and wiring has often been performed improperly (e.g., by installing sensors in the wrong location, failing to adequately connect lead wires, etc.) leading to failure or malfunction of the transmission.

There is thus a need for a sensor assembly for a transmission that will minimize or eliminate one or more of the above-mentioned deficiencies.

### SUMMARY OF THE INVENTION

The present invention provides a sensor assembly for a transmission.

A sensor assembly for a transmission in accordance with the present invention includes a sensor module and a sensor. The sensor module includes a body that is received within a housing wall of the transmission. The body includes a first connector and may also include a land having an aperture through which a fastener may extend to secure the module to the housing wall. The sensor module further includes a lead wire that extends from the body and which may extend within the transmission from the body of the sensor module to a connector disposed within the transmission. This latter connector may comprise a mass-termination connector or a circuit board that receives lead wires from a plurality of sensor assemblies in the transmission and is used to interface with the vehicle or other machine in which the transmission is installed. The sensor includes a housing configured to be received within the body of the sensor module. The housing also includes a second connector configured to engage the first connector of the sensor module. The first and second connectors may comprise pin and socket connectors. The sensor finally includes a sensing element disposed within the sensor housing.

A sensor assembly in accordance with the present invention represents a significant improvement over conventional transmission sensor assemblies. The assembly allows pre-installation of the sensor module and wiring by the transmission manufacturer prior to shipment, yet allows the sensing element itself to be easily installed by the customer. As a result, both improper installation of the sensor assembly and damage to the sensor assembly is minimized. The inventive sensor assembly has additional advantages as well. First, the location of the lead wires within the transmission protects the wires from damage and makes routing to a central connection point relatively easy. Second, the separate sensor module and sensor enable differentiation in mechanical design of various sensors to ensure the appropriate sensor is installed in the appropriate module. Third, the ability to easily remove and install the sensor from the module without rewiring reduces maintenance and repair costs.

These and other features and objects of this invention will become apparent to one skilled in the art from the following detailed description and the accompanying drawings illustrating features of this invention by way of example.

### BRIEF DESCRIPTION OF THE DRAWINGS

Figure 1 is a diagrammatic view illustrating a transmission incorporating a plurality of sensor assemblies in accordance with the present invention.

Figure 2 is a perspective view of an assembled sensor assembly in accordance with the present invention.

Figure 3 is an exploded perspective view of the sensor assembly of Figure 2.

### DETAILED DESCRIPTION OF THE PREFERRED EMBODIMENT

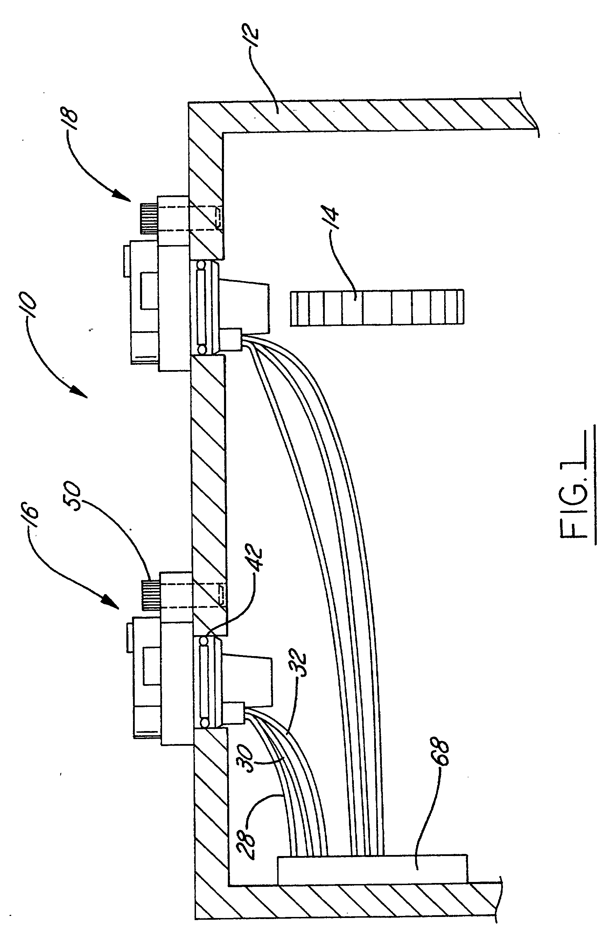

Referring now to the drawings wherein like reference numerals are used to identify identical components in the various views, Figure 1 diagrammatically illustrates a transmission 10. Transmission 10 is provided to transmit power from an engine to other motive parts of a machine (e.g., an axle on a vehicle). Transmission 10 is generally conventional in the art and includes a housing 12 and one or more gears 14 among other conventional components. Transmission 10, however, also includes a plurality of sensor assemblies 16, 18 in accordance with the present invention.

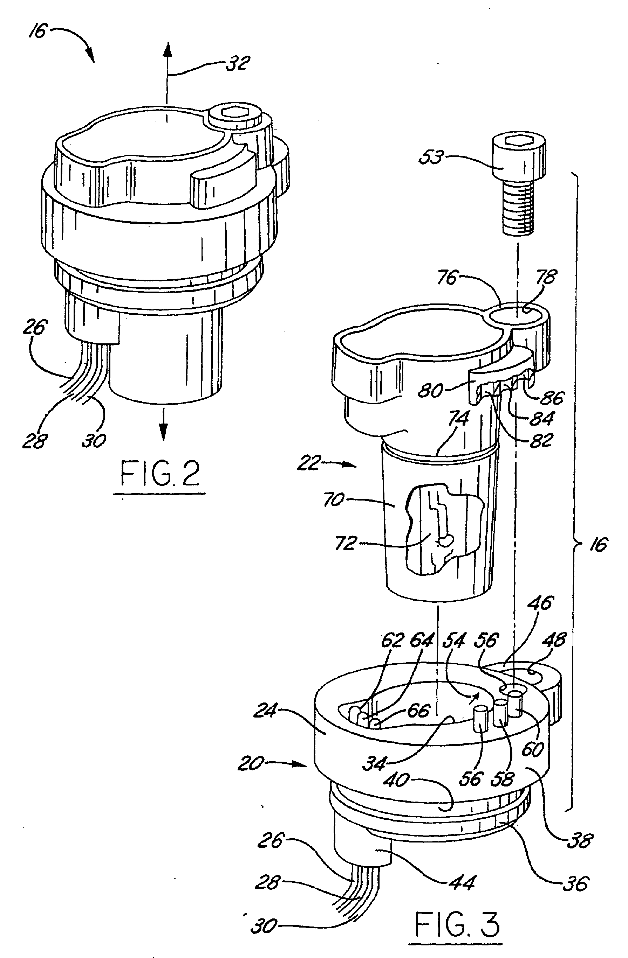

Sensor assemblies 16, 18 are provided to generate signals indicative of various parameters associated with transmission 10. Sensor assembly 16 may, for example, be used to measure temperature within transmission 10 while sensor assembly 18 may be used to measure speed or distance traveled as evidenced through rotation of gear 14. It should be understood, however, that the inventive sensor assembly could be used to evaluate a variety of different parameters within transmission 10. Referring now to Figures 2 and 3, sensor assembly 16 includes a sensor module 20 and a sensor 22. Because each of the sensor assemblies 16, 18 may be substantially similar in construction (except as noted hereinbelow so as to ensure proper placement on transmission 10)--varying only in the electronics disposed therein as required by the application of the sensor assembly-only sensor assembly 16 will be described in detail.

Sensor module 20 is provided to position and support sensor 22 and to route signals generated by sensor 22. Module 20 includes a body 24 and a plurality of lead wires 26, 28, 30.

Body 24 is configured to receive sensor 22 and to secure sensor assembly 16 within transmission housing 12. Body 24 may be molded from various conventional plastics. Body 24 is generally annular in shape and is disposed about an axis 32. Body 24 defines a bore 34 configured to receive sensor 22 and through which sensor 22 extends into transmission 10. Bore 34 is generally circular, but opens radially outwardly near one axial end to receive the ends of lead wires 26, 28, 30. Body 24 includes a first portion 36 and a second portion 38.

Portion 36 of body 24 is received within transmission housing 12 (best shown in Figure 1). Portion 36 defines a circumferential groove 40 in which a seal 42 (best shown in Figure 1) may be disposed to prevent leakage of fluids from transmission 10. Portion 36 further defines a projection 44 that extends into transmission 10. Projection 44 receives and secures lead wires 26, 28, 30.

Portion 38 of body 24 is disposed outside of transmission housing 12. Portion 38 defines a land 46 that extends radially outwardly from portion 38. Land 46 is generally circular in shape and defines an aperture 48 through which a bolt, screw, or other fastener 50 may extend to secure module 20 to transmission housing 12 (best shown in Figure 1). Portion 38 also defines an aperture 52 sized to receive a bolt, screw, or other fastener 53 used to couple module 20 and sensor 22 together. Finally, portion 38 includes a connector 54 that may be used to position and further secure sensor 22 and module 20. In the illustrated embodiment, connector 54 comprises three axially extending pins 56, 58, 60. It should be understood, however, that connector 54 may take on a variety of other forms that are conventional in the art.

Lead wires 26, 28, 30 are provided to transmit signals generated by sensor assembly 16 to one or more electronic control units within the machine in which transmission 10 is disposed. Lead wires 26, 28, 30 are conventional in the art. In the illustrated embodiment, three wires are shown. It should be understood, however, that the number of wires may vary. Each of wires 26, 28, 30 may define a terminal 62, 64, 66, respectively, at one end configured to engage corresponding'terminals (not shown) in sensor 22 and receive signals generated by sensor 22. Wires 26, 28, 30 are routed through portions 36, 38 of module 20 and exit module 20 through projection 44. Referring now to Figure 1, wires 26, 28, 30 may then be routed to a central connector 68 along with the wires from other sensor assemblies. Wires 26, 28, 30 may be encapsulated within a cable (not shown) within transmission 10. Connector 68 may comprise mass-termination connector or circuit board capable of interfacing with a wire harness to transmit signals to other electronic control units within the vehicle or other machine in which transmission 10 is installed. The location and connection of wires 26, 28, 30 in the transmission sensor assemblies 16, 18 of the present invention is a significant advantage. First, because the wires 26, 28, 30 are disposed entirely within transmission housing 12, they are less likely to be damaged during transport, installation, and use of transmission 10. Second, the wires 26, 28, 30 may be more easily routed to a central connection point such as connector 68. As a result, a less complex wire harness can be used to route signals from the various transmission sensor assemblies 16, 18.

Referring again to Figures 2 and 3, sensor 22 generates signals indicative of the value of a parameter associated with transmission 10. Sensor 22 includes a housing 70 and a sensing element 72.

Housing 70 protects sensor element 72 from foreign elements and objects prior to and during installation. Housing 70 also provides a means for coupling sensor 22 to sensor module 20. Housing 70 may be molded from a variety of conventional plastics and is generally cylindrical in shape, being sized so as to fit within bore 34 of module 20. The outer circumference of housing 70 defines a groove 74 in which a seal (not shown) may be disposed to prevent leakage of fluids between sensor 22 and module 20 from transmission 10. Housing 70 also defines a land 76 that extends radially outwardly. Land 76 is generally circular in shape and defines an aperture 78 that aligns with aperture 52 in module.. A bolt, screw, or other fastener 53 may extend through apertures 52, 78 to secure sensor 22 to module 20. Housing 70 also includes a connector 80 configured to engage connector 54 on module 20. In the illustrated embodiment, connector 80 includes three sockets 82, 84, 86 sized to receive corresponding pins 56, 58, 60 of connector 54. Alternatively connector 80 may include a plurality of pins while connector 54 includes corresponding sockets. It should also be understood that connectors 54, 80 may take on a variety of other forms without departing from the spirit of the present invention.

Sensing element 72 is provided to determine the value of a parameter associated with transmission 10. Element 72 is conventional in the art and may comprise any of a variety of sensing circuits depending upon the parameter to be measured. For example, element may comprise a speed pick-up sensor, Hall effect sensor or temperature sensor and their associated signal conditioning circuits.

A method of installing the inventive sensor assembly 16 would include the steps of installing the sensor module 20 into the transmission housing wall 12 and inserting a fastener 50 through the aperture 48 in the land 46 of body 24 and into the transmission housing wall 12. The method would then include the step of routing the lead wires 26, 28, 30 of module 20 to connector 68 and coupling the wires 26, 28, 30 to connector 68. The method may then include the step of inserting a plug (not shown) into the bore 34 of body 24 of sensor module 20. Each of these steps may occur during assembly of transmission 10. Upon delivery of the transmission 10 to the customer and installation of the transmission 10 within the vehicle or other machine, a method of installing the sensor assembly 16 would further include the steps of removing the plug and inserting the sensor 22 into the sensor module 20. This step may include the substeps of inserting the sensor housing 70 through the bore 34 in body 24 of module 20 and engaging connectors 54, 80 on sensor module 20 and sensor 22. The step may also include the substep of inserting fastener 53 through aperture 78 in land 76 on sensor housing 70 and into aperture 52 in body 24 of sensor module 20.

A sensor assembly 16 in accordance with the present invention represents a significant improvement over conventional transmission sensor assemblies. In particular, the assembly 16 allows a manufacturer to pre-install the sensor module 20 and make required wiring connections prior to shipment and the customer to easily install the sensor 22 after delivery of the transmission 10. As a result, the sensor assembly 16 is more likely to be installed correctly and the risk of damage to the sensing element 72 itself is minimized.

The inventive sensor assembly 16 is also advantageous because the sensor module 20 and sensor 22 can be configured to ensure that sensors 22 are installed in the proper locations on transmission 10. Speed sensors must be installed in defined positions relative to the gears 14 of the transmission 10. In the inventive sensor assembly 16, the sensor module 20 and sensor 22 can be provided with a different mechanical design (e.g., by changing the location or configuration of connectors 54, 80) to ensure that only the appropriate sensor 22 can be installed in a specific location. Many existing sensor assemblies are delivered to the customer as an integrated unit and the customer may, therefore, install various sensor assemblies in improper locations on the transmission.

Finally, the inventive sensor assembly 16 reduces maintenance and repair costs. A customer need only remove and replace a faulty sensor 22 without any rewiring of the assembly 16 itself.

While the invention has been particularly shown and described with reference to the preferred embodiments thereof, it is well understood by those skilled in the art that various changes and modifications can be made in the invention without departing from the spirit and scope of the invention. For example, it is contemplated that signal condition circuits, memory, or other electronic components could be integrated into the body 24 of the sensor module 20 or the housing 70 of the sensor 22 to process signals from the sensing element 72.

## Claims

1. A sensor assembly (16) for a transmission (10), comprising:
a sensor module (20) having
a body (24) received within a housing wall of said transmission (10), the body (24) including a first connector (54); and,
a lead wire (26) extending from said body (24); and,
a sensor (22) having
a housing (70) including a second connector (80) configured to engage said first connector (54) ; and,
a sensing element (72) disposed within said housing (70).

2. A sensor assembly (16) for a transmission (10), comprising:
a sensor module (20) having
a body (24) received within a housing wall of said transmission (10), the body (24) including a first connector (54) and a first land (46) having an aperture (48) extending therethrough; and,
a lead wire (26) extending from said body (24) ;
a sensor (22) having
a housing (70) including a second connector (80) configured to engage said first connector (54) and a second land (76) having an aperture (78) extending therethrough; and,
a sensing element (72) disposed within said housing (70);
a first fastener (50) extending through said aperture (48) in said first land (46) and into said housing wall of said transmission (10); and,
a second fastener (53) extending through said aperture (78) in said second land (76) and into said body (24) of said sensor module (20).

3. A sensor assembly (16) for a transmission (10), comprising:
a sensor module (20) having
a body (24) received within a housing wall of said transmission (10), the body (24) including a first connector (54) ; and,
a lead wire (26) extending from said body (24)
a senor (22) having
a housing (70) including a second connector (80) configured to engage said first connector (54); and,
a sensing element (72) disposed within said housing (70) wherein said lead wire (26) is connected at one end to a third connector (68) within said transmission (10).

4. The sensor assembly (16) of claim 1 or 3 wherein said body (24) of said sensor module (20) includes a land (46) having an aperture (48) configured to receive a fastener (50) extending into said wall of said transmission (10).

5. The sensor assembly (16) of claim 1, 3 or 4, wherein said housing (70) includes a land (76) configured to receive a fastener (53)extending into said body (24) of said sensor module (20).

6. The sensor assembly (16) of any one of the preceding claims, wherein said body (24) defines a bore (34) and said housing (70) of said sensor (22) extends through said bore (34) and into said transmission (10).

7. The sensor assembly (16) of any one of the preceding claims, wherein one of said first and second connectors (54, 80) includes a plurality of pins (56, 58) and another of said first and second connectors (54, 80) includes a corresponding plurality of sockets (82, 84).

8. The sensor assembly (16) of any one of the preceding claims, wherein said lead wire (26) is disposed within said transmission (10).

9. The sensor assembly (16) of any one of the preceding claims, wherein said sensor (22) comprises one of a speed sensor and a temperature sensor.

10. A transmission including a sensor assembly in accordance with any one of the preceding claims.

11. A method of installing, in a transmission, a sensor assembly in accordance with any one of the preceding claims, the method comprising fitting the sensor module to the transmission and subsequently fitting the sensor to the sensor module.
